# EUROPÄISCHE PATENTANMELDUNG

(11) **EP 0 901 965 A2**
(43) Veröffentlichungstag der Anmeldung: **17.03.1999**
(21) Anmeldenummer: 98108284.5
(22) Anmeldetag: 07.05.1998
(51) Int. Cl.: B64F 1/315

(54) **Fahrbares Chassis**

(30) Priorität: 15.09.1997 AT 1543/97
(71) Anmelder: Kahlbacher, Anton, 3363 Amstetten-Neufurth (AT)
(72) Erfinder: Kahlbacher, Anton, 3363 Amstetten-Neufurth (AT)
(74) Vertreter: Hefel, Herbert, Dipl.-Ing.

(57) **Zusammenfassung**

Das fahrbare Chassis besitzt eine um eine horizontale Achse (20) verschwenkbare Zugdeichsel (19) und zwei Radachsen, wobei zumindest die Räder (7) einer Radachse um vertikale Achsen (8) schwenkbar gelagert sind. Die Räder (6, 7) der Radachsen sind antriebslos und frei drehbar. Am Chassis (1) ist ein in und außer Bodenhaftung bringbares Antriebsrad (11) vorgesehen. Das Antriebsrad (11) liegt innerhalb eines gedachten Rahmens, dessen Eckpunkte durch die Räder (6, 7) der Radachsen gebildet sind. Das Antriebsrad (11) ist nahe einer Längsseite des gedachten Rahmens gegenüber der vertikalen Längsmittelebene des Chassis (1) seitlich versetzt angeordnet und mittels einer Steuervorrichtung (12, 13) lenkbar. Die schwenkbar gelagerten Räder (7) der einen Radachse sind nachlaufgelagert.

## Beschreibung

Die Erfindung bezieht auf ein fahrbares Chassis mit mindestens einer um eine horizontale Achse verschwenkbaren Zugdeichsel und mit zumindest zwei Radachsen, wobei zumindest die Räder einer Radachse um vertikale Achsen schwenkbar gelagert sind und die Räder der Radachsen antriebslos und frei drehbar gelagert sind und am Chassis mindestens ein in und außer Bodenhaftung bringbares Antriebsrad vorgesehen ist und das Antriebsrad innerhalb eines gedachten Rahmens liegt, dessen Eckpunkte durch die Räder der Radachsen gebildet sind.

Ein fahrbares Chassis dieser Art ist aus der GB-2193 174 A bekannt. Es dient als Träger für eine Fahrgasttreppe, wie sie auf Flughäfen verwendet wird. Das Antriebsrad liegt in der Längsmittelebene des rechteckförmigen Chassis und die Räder der einen Radachse sind über eine starre Welle mit einer Zugdeichsel verbunden. Das Antriebsrad ist von einer Schwinge getragen und in einer vertikalen Ebene verstellbar, so daß das Antriebsrad in und außer Bodenhaftung gebracht werden kann. Wird das fahrbare Chassis mittels der Zugdeichsel an ein Zugfahrzeug angehängt, so wird das Antriebsrad hochgehoben. Wenn das Chassis bzw. die von ihm getragene Fahrgasttreppe an ein Fluggerät angestellt werden muß, dann wird dafür das Antriebsrad eingesetzt, mittels welchem die dafür notwendigen Manövrierbewegungen durchgeführt werden. Mittels dieses Antriebsrades ist das Chassis bzw. die Fahrgasttreppe selbstfahrend. Die hier vorgesehenen Geschwindigkeiten sind relativ gering, sie liegen im Bereich bis ca. 8 km/h.

Von diesem Stand der Technik ausgehend zielt die Erfindung darauf ab, ein fahrbares Chassis der erwähnten Art so weiter konstruktiv auszugestalten, daß vor allem seine Wendigkeit verbessert wird, damit es auch unter beengten Platzverhältnissen leicht manövrierbar ist. Zur Lösung dieser Aufgabe wird erfindungsgemäß vorgeschlagen, daß das Antriebsrad nahe einer Längsseite des gedachten Rahmens, gegenüber der vertikalen Längsmittelebene des Chassis seitlich versetzt angeordnet und mittels einer Steuervorrichtung um eine aufrechte Achse lenkbar ist und die schwenkbar gelagerten Räder der einen Radachse nachlaufgelagert sind. Das Chassis kann mit einem Schutzdach versehen sein, wie dies nachfolgend anhand eines Ausführungsbeispieles der Erfindung erörtert werden wird, oder aber das Chassis kann eine Treppe tragen. Auch eine Kombination von Schutzdach und Treppe mit diesem Chassis ist denkbar und möglich, denn die erfindungsgemäße Einrichtung dient ja dazu, Flugpassagieren einen geschützten Zugang zum Flugzeug zu ermöglichen.

Um die Erfindung zu veranschaulichen, wird sie anhand der Zeichnung näher beschrieben, die ein Ausführungsbeispiel der Erfindung veranschaulicht. Es zeigen:
- Fig. 1: einen vertikalen Längsschnitt durch ein fahrbares Schutzdach;
- Fig. 2: eine Draufsicht auf das fahrbare Schutzdach nach Fig. 1 bei abgenommener Dachhaut;
- Fig. 3: ein Detail aus Fig. 1 in einem gegenüber dieser Figur vergrößerten Maßstab in Seitensicht und in Fahrbereitschatt;
- Fig. 4: das Detail aus Fig. 3 in Schleppbereitschaft.

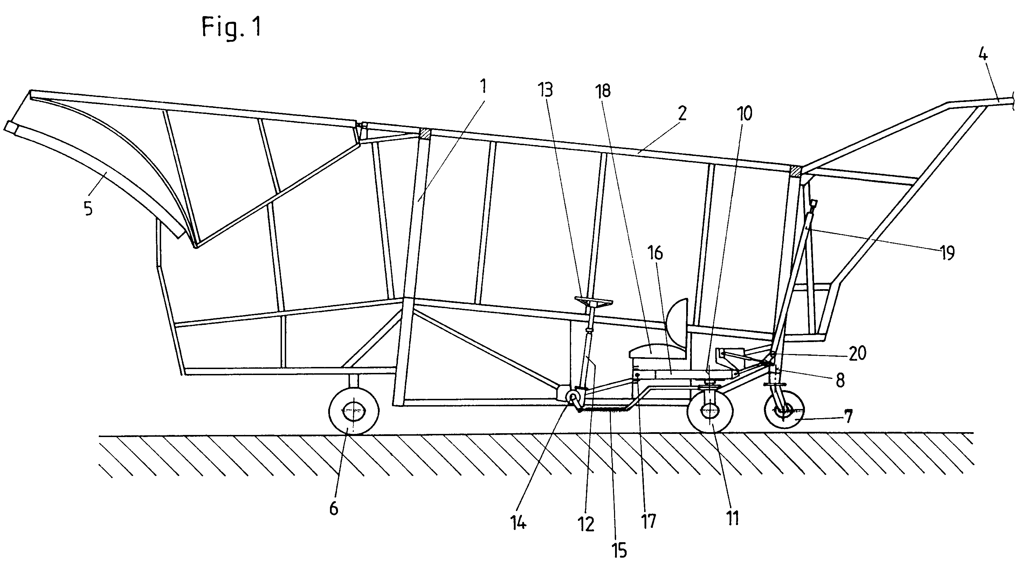

Das fahrbare Schutzdach, das im vertikalen Längsschnitt in Fig. 1 dargestellt ist und das auf Flughäfen in der Regel von regionaler Bedeutung eingesetzt wird, besitzt ein portalartiges Chassis 1 mit einem Oberteil 2 und Seitenteilen, wobei am einen Ende ein auskragendes Dach 4 vorgesehen ist und am anderen Ende ein schwenkbarer Balgrahmen 5, der an das Fluggerät anlegbar ist. Dieses Chassis 1, das zwischen den beiden Seitenteilen 3 Bodenfreiheit besitzt, ist von vier antriebslosen Rädern 6 und 7 getragen, wobei diese Räder 6 bzw. 7 je eine Radachse bilden. Die Achsen der Räder 6 sind fest am Chassis 1 angeordnet, wogegen die Räder 7 am Chassis 1 nachlaufgelagert sind, sie sind um vertikale Achsen 8 verschwenkbar, die seitlich der horizontalen Drehachse des jeweiligen Rades liegen. Nachlaufgelagert im Sinne der Erfindung bedeutet, daß diese so gelagerten Räder 7 selbsttätig in Fahrtrichtung sich einstellen, wenn auf das Chassis eine Zugkraft oder Schubkraft durch das Antriebsrad 11 einwirkt.

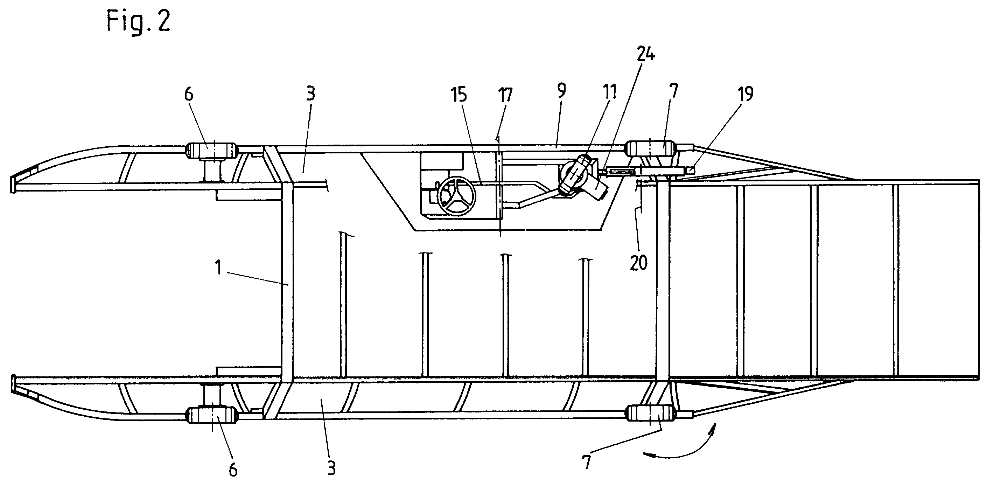

Die Räder 6 der einen Radachse und die Räder 7 der anderen Radachse bilden die Eckpunkte eines gedachten Rechteckes, neben dessen einer Längsseite 9 und nahe der Radachse mit den um die vertikalen Achsen verschwenkbaren, nachlaufgelagerten Rädern 7 ein Antriebsrad 11 vorgesehen ist. Die Anordnung könnte auch so getroffen werden, daß dieses Antriebsrad 11 in der durch die Räder 7 gebildeten Radachse liegt. Dieses Antriebsrad 11 ist um eine aufrechte Achse 10 verschwenkbar. Zur Verschwenkung des Antriebsrades 11 dient eine Steuereinrichtung, die eine aufrechte Lenksäule 12 und ein Lenkrad 13 aufweist, wobei die Drehbewegung des Lenkrades 13 über ein Getriebe 14 und eine Schubstange 15 auf das Antriebsrad 11 übertragen wird. Dieses Antriebsrad 11 ist an einer Schwinge 16 gelagert mit einer horizontalen Schwenkachse 17. Zwischen dem Antriebsrad 11 und der Lenksäule 12 ist ein Führersitz 18 vorgesehen, der in der Draufsicht nach Fig. 2 aus Gründen der Übersichtlichkeit nicht dargestellt ist. Die Anordnung des Antriebsrades 11 ist so gewählt, daß es nahe der Radachse mit den verschwenkbaren Rädern 7 liegt. Das Antriebsrad kann über die Achse 10 durch das Lenkrad 13 fast um 180 ° gedreht werden. Dadurch kann ein ganz kleiner Wendekreis sowohl links als auch rechts fast über das stehende Laufrad 7 erreicht werden. Zum Antrieb des Antriebsrades selbst ist ein Motor 24 vorgesehen, der an das Antriebsrad angeflanscht bzw. an der Schwinge 16 gelagert ist.

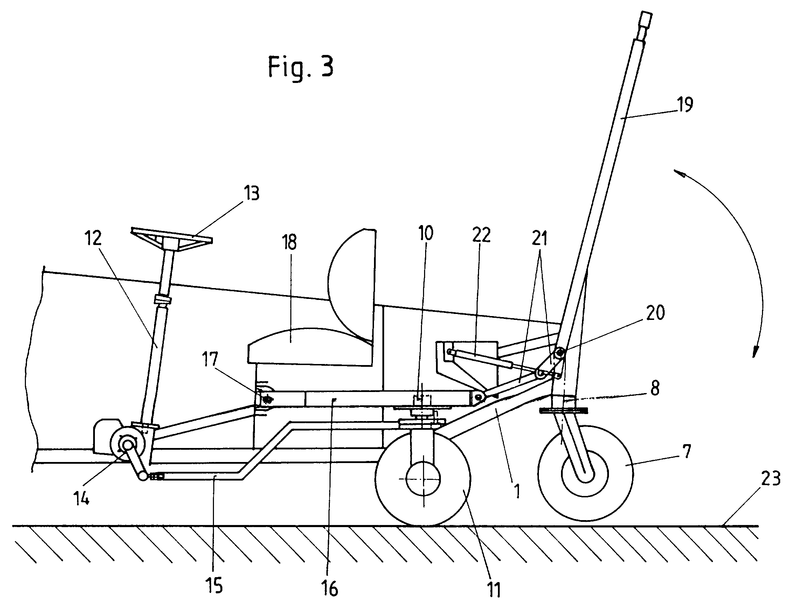

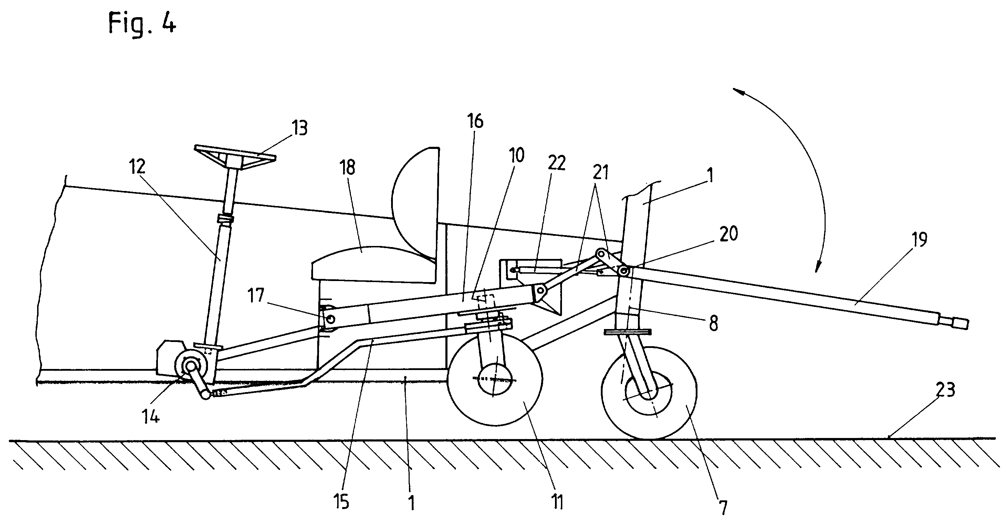

Oberhalb der Achse mit den schwenkbaren Rädern 7 ist eine Zugdeichsel 19 angeordnet, die um eine horizontale unten liegende Achse 20 nach unten schwenkbar ist (Fig. 3 und 4). Am unteren Ende der Zugdeichsel 19 ist ein Hebelgetriebe 21 angelenkt, das mit der Schwinge 16 verbunden ist. Parallel zu diesem Hebelgetriebe 21 sind Druckfedern 22 vorgesehen, von welchen in Fig. 3 nur eine aus Gründen der Übersichtlichkeit gezeigt ist und von welchen die eine dazu dient, die hochgestellte Zugdeichsel 19 (Fig. 3) in ihrer hochgestellten Lage zu halten und die andere Gasdruckfeder dazu, die Schwinge 16 mit dem Antriebsrad 11 nach unten gegen den Boden 23 mit großer Kraft zu drücken. Es ist dabei möglich, einzelne Hebel des Hebelgetriebes als Gasdruckfedern auszubilden. Für den Antrieb des Motors 24 ist innerhalb des Chassis 1 eine Batterie vorgesehen, die hier nicht dargestellt ist, ebensowenig wie die Steuerungsglieder für die Inbetriebnahme und Außerbetriebnahme dieses Motors.

Das Chassis 1 ist so gestaltet, daß es entweder aus eigener Kraft fährt, was dann geschieht, wenn es an ein Fluggerät angestellt wird oder aber, wenn größere Distanzen zu überwinden sind, wird es über die Zugdeichsel 19 an ein Schleppfahrzeug angehängt.

Fährt das Chassis 1 aus eigener Kraft, so ist die Zugdeichsel 19 hochgeschwenkt (Fig. 3). Über das Hebelgetriebe 21 und die mit diesem Hebelgetriebe zusammenwirkenden Gasdruckfedern 22 wird das Antriebsrad 11 über die Schwinge 16 mit einer solchen Kraft gegen den Boden 23 gedrückt, daß der das schwenkbare Rad 7 tragende Seitenteil des Chassis 1 etwas angehoben wird, so daß dieses schwenkbare Rad 7 seine Bodenhaftung verliert, was aus Fig. 3 ersichtlich ist. Durch Zuschalten des Antriebsmotors 24 und durch Lenken des Antriebsrades 11 über das Lenkrad 13 kann nun das Chassis 1 mit geringer Geschwindigkeit verfahren und gelenkt werden, so daß es mit großer Sorgfalt und behutsam an ein Fahrgerät heranmanövrierbar ist, wobei der seitlich sitzende Fahrer diese Fahrt genau überwachen kann.

Soll das Chassis 1 innerhalb des Flugplatzes über größere Strecken verfahren werden, so wird die Zugdeichsel 19 nach unten geschwenkt (Fig. 4), um an ein hier nicht dargestelltes Schlepp- oder Zugfahrzeug angehängt zu werden. Beim Verschwenken der Zugdeichsel 19 nach unten wird über das Hebelgetriebe 21 und die mit diesem zusammenwirkenden Gasdruckfedern 22 die Schwinge 16 mit dem Antriebsrad 11 hochgeschwenkt, so daß das Rad 7 Bodenhaftung erlangt, das Antriebsrad 11 jedoch vom Boden 23 abgehoben wird. Nun kann das Chassis 1 mit relativ hoher Geschwindigkeit mittels eines Schlepp- oder Zugfahrzeuges verfahren werden, wobei die nachlaufgelagerten Räder 7 spurtreu folgen.

Ein Schutzdach der hier vorgestellten Art hat eine Länge von ca. 10 m. Dank der beschriebenen Konstruktion ist es dennoch außerordentlich beweglich, so daß selbst enge Kurven problemlos durchfahren werden können. Der Bedienungsmann auf dem Führersitz 18 kann vom Inneren des Schutzdaches aus die ausfahrbare Treppe des Fahrgerätes beobachten und daher den Andockvorgang exakt und mit größter Sorgfalt ausführen. Anstelle eines Elektromotors 24 für den Antrieb des Antriebsrades 11 kann auch ein Hydraulikmotor eingesetzt werden. Der Antriebsmotor hat jeweils einen Rechts- und Linkslauf, so daß das Antriebsrad 11 in beiden Richtungen angetrieben werden kann und das Chassis vor- und zurückfahrbar ist. Aufgrund der Kräfte, die das Antriebsrad 11 gegen den Boden 23 drücken, ist ein schlupffreier Fahrbetrieb und eine einwandfreie Lenkung des Chassis möglich. Der Führersitz 18 ist zweckmäßigerweise mit einem Sitzkontaktschalter bestückt, der sicherstellt, daß der Antrieb nur dann in Betrieb gesetzt werden kann, wenn der Führersitz belegt ist. Der Antrieb ist so gesteuert, daß eine Geschwindigkeit von ca. 0 bis 8 km/h stufenlos wählbar ist. Im Schleppbetrieb kann das Schutzdach mit bis zu 30 km/h verfahren werden.

Im gezeigten Ausführungsbeispiel sind Zugdeichsel 19 und Schwinge 16 mechanisch über das Hebelgetriebe 21 und die Gasdruckfedern 22 gekoppelt. Anstelle einer solchen rein mechanischen Verbindung könnte auch eine elektrische oder hydraulische Welle vorgesehen werden mit geeigneten Sensoren und Stellgliedern, die die vorstehend beschriebenen, voneinander abhängigen Bewegungen von Zugdeichsel 19 und Schwinge 16 bewirken und steuern.

Das gezeigte Ausführungsbeispiel zeigt ein Schutzdach mit einem portal- oder tunnelartigen Chassis, das zwischen beiden Seitenteilen volle Bodenfreiheit beläßt. Es ist denkbar, dieses Chassis 1 mit geeigneten konstruktiven Abwandlungen, was seinen unmittelbaren Aufbau betrifft, als Träger für eine Fahrgasttreppe zu verwenden, wie sie auf Flughäfen eingesetzt wird.

### Legende zu den Hinweisziffern:

- 1: Chassis
- 2: Oberteil
- 3: Seitenteil
- 4: Dach
- 5: Balgrahmen
- 6: Rad
- 7: Rad
- 8: vertikale Achse
- 9: Längsseite
- 10: aufrechte Achse
- 11: Antriebsrad
- 12: Lenksäule
- 13: Lenkrad
- 14: Getriebe
- 15: Schubstange
- 16: Schwinge
- 17: horizontale Schwenkachse
- 18: Führersitz
- 19: Zugdeichsel
- 20: horizontale Achse
- 21: Hebelgetriebe
- 22: Gasdruckfeder
- 23: Boden
- 24: Antriebsmotor

## Patentansprüche

1. Fahrbares Chassis mit mindestens einer um eine horizontale Achse (20) verschwenkbaren Zugdeichsel (19) und mit zumindest zwei Radachsen, wobei zumindest die Räder (7) einer Radachse um vertikale Achsen (8) schwenkbar gelagert sind und die Räder (6, 7) der Radachsen antriebslos und frei drehbar gelagert sind und am Chassis (1) mindestens ein in und außer Bodenhaftung bringbares Antriebsrad (11) vorgesehen ist und das Antriebsrad (11) innerhalb eines gedachten Rahmens liegt, dessen Eckpunkte durch die Räder (6, 7) der Radachsen gebildet sind, dadurch gekennzeichnet, daß das Antriebsrad (11) nahe einer Längsseite (9) des gedachten Rahmens, gegenüber der vertikalen Längsmittelebene des Chassis (1) seitlich versetzt angeordnet und mittels einer Steuervorrichtung (12, 13) um eine aufrechte Achse (10) lenkbar ist und die schwenkbar gelagerten Räder (7) zumindest der einen Radachse nachlaufgelagert sind.

2. Fahrbares Chassis nach Anspruch 1, dadurch gekennzeichnet, daß das in und außer Bodenhaftung bringbare Antriebsrad (11) nahe oder in der Radachse mit den nachlaufgelagerten, schwenkbaren Rädern (7) liegt.

3. Fahrbares Chassis nach Anspruch 1, dadurch gekennzeichnet, daß der Radachse mit den nachlaufgelagerten, schwenkbaren Rädern (7) die Zugdeichsel (19) benachbart liegt.

4. Fahrbares Chassis nach einem der Ansprüche 1 bis 3, dadurch gekennzeichnet, daß das Antriebsrad (11) an einer am Chassis (1) gelagerten, um eine horizontale Achse (17) verschwenkbaren Schwinge (16) angeordnet ist.

5. Fahrbares Chassis nach einem der Ansprüche 1 bis 4, dadurch gekennzeichnet, daß die Neigung der Schwinge (16) gegenüber der Horizontalen abhängig ist von der Stellung der Zugdeichsel (19) gegenüber der Horizontalen und bei hochgeschwenkter Zugdeichsel (19) die Schwinge (16) abgesenkt und das Antriebsrad (11) in Bodenhaftung ist bzw. bei in Betriebsstellung befindlicher Zugdeichsel (19) die Schwinge (16) angehoben und das Antriebsrad (11) außer Bodenhaftung ist (Fig. 3 und 4).

6. Fahrbares Chassis nach Anspruch 5, dadurch gekennzeichnet, daß das freie Ende der Schwinge (16) über ein Getriebe, vorzugsweise ein Hebelgetriebe (21), mit der Zugdeichsel (19) verbunden ist, über welche die Schwenkbewegung der Zugdeichsel (19) auf die Schwinge (16) übertragbar ist.

7. Fahrbares Chassis nach Anspruch 6, dadurch gekennzeichnet, daß das Hebelgetriebe (21) unter anderem Gasdruckfedern (22) aufweist, welche die jeweiligen Endlagen von Schwinge (16) und Zugdeichsel (19) fixieren.

8. Fahrbares Chassis nach einem der Ansprüche 1 bis 7, dadurch gekennzeichnet, daß der Antriebsmotor (24) für das Antriebsrad (11) an der Schwinge (16) gelagert ist.

9. Fahrbares Chassis nach einem der Ansprüche 1 bis 7, dadurch gekennzeichnet, daß die der Lenkung des Antriebsrades (11) dienende Steuervorrichtung nahe jener Längsseite (9) des gedachten Rahmens liegt, der auch das Antriebsrad (11) benachbart ist.

10. Fahrbares Chassis nach Anspruch 9, dadurch gekennzeichnet, daß zwischen der Steuervorrichtung (12, 13) für die Lenkung des Antriebsrades (11) und dem Antriebsrad (11) selbst ein Sitz (18) für eine Bedienungsperson vorgesehen ist.

11. Fahrbares Chassis nach Anspruch 1, dadurch gekennzeichnet, daß die Steuereinrichtung zur Lenkung des Antriebsrades (11) eine aufrechte Lenksäule mit einem Lenkrad (13) aufweist.

12. Fahrbares Chassis nach einem der Ansprüche 1 bis 11, dadurch gekennzeichnet, daß es als Träger für eine Fahrgasttreppe dient.

13. Fahrbares Chassis nach einem der Ansprüche 1 bis 11, dadurch gekennzeichnet, daß es portal- oder tunnelartig ausgebildet ist und als Auflager für eine ein Schutzdach bildende Überdeckung vorgesehen ist.

14. Fahrbares Chassis nach Anspruch 11, dadurch gekennzeichnet, daß das Antriebsrad (11) mit der Steuereinrichtung um einen Winkel von ca. 180 ° verschwenkbar ist.
